# DEMANDE DE BREVET EUROPEEN

(11) **EP 1 044 714 A1**
(43) Date de publication de la demande: **18.10.2000**
(21) Numéro de dépôt: 00400930.4
(22) Date de dépôt: 04.04.2000
(51) Int. Cl.: B01D 53/04, B01D 53/047, A61M 16/10

(54) **Equipement medical portable de production d'oxygène utilisable en oxygénothérapie**

(30) Priorité: 13.04.1999 FR 9904585
(71) Demandeur: AIR LIQUIDE SANTE (INTERNATIONAL), 75007 Paris (FR)
(72) Inventeur: Hennebel, Vincent, 92310 Sevres (FR); Boissin, Jean-Claude, 38330 Saint Ismier (FR)
(74) Mandataire: Le Moenner, Gabriel

(57) **Abrégé**

L'invention concerne un équipement portable ou transportable utilisable en oxygénothérapie à domicile ou à l'hôpital, destiné aux personnes souffrant d'insuffisances respiratoires et traitées par administration d'oxygène gazeux afin de corriger les teneurs en gaz de leur sang, en particulier les teneurs en dioxyde de carbone et en oxygène. Cet équipement comprenant des moyens de compression de gaz pour fournir de l'air à une pression supérieure à 10⁵ Pa à des moyens concentrateurs de gaz, et des moyens concentrateurs de gaz permettant de produire un gaz riche en oxygène contenant de 50% vol. à 99% vol. d'oxygène à partir d'air comprimé comprenant une ou plusieurs enceinte de séparation de gaz (5a,5b) contenant chacune un lit d'adsorbant constitué de particules de zéolite X ou A échangée par un ou des cations métalliques, tels le lithium ou le calcium.

## Description

Le but de la présente invention est de proposer un équipement médical portable et/ou transportable permettant, notamment l'oxygénothérapie à domicile et la déambulation du patient, lequel équipement permet de produire un gaz riche en oxygène à partir d'air ambiant en vue de sa fourniture ultérieure à un utilisateur.

Classiquement, certaines personnes souffrant d'insuffisances respiratoires sont traitées par administration d'oxygène gazeux afin de corriger les teneurs en gaz de leur sang, en particulier les teneurs en dioxyde de carbone et en oxygène.

Dans certains cas, l'état pathologique de ces personnes nécessite l'administration chronique et de longue durée d'oxygène gazeux, notamment pour les patients atteints de broncho-pneumopathies chroniques obstructives, dont la pression artérielle en oxygène est stabilisée à des valeurs inférieures à 55 mm de mercure.

Pour ce faire, divers modes et équipements de fourniture d'oxygène pouvant être mis en oeuvre à domicile ont été développés.

Actuellement, l'oxygène utilisé à cette fin est :
- soit amené sur site d'utilisation en étant stocké sous forme gazeuse, par exemple dans des bouteilles de gaz de taille variable, pour être ensuite administré au patient,
- soit amené sur site d'utilisation en étant stocké sous forme liquéfié, par exemple dans un réservoir adapté, lequel réservoir est relié à un système d'évaporation destiné à vaporiser l'oxygène liquide, de manière à pouvoir l'administrer au patient sous forme gazeuse ; un tel appareil est commercialisé par la Société TAEMA sous la dénomination FREELOX™,
- soit produit directement sur site d'utilisation au moyen d'un dispositif concentrateur permettant d'extraire l'oxygène de l'air grâce à une adsorption sélective de l'azote sur un tamis moléculaire selon un cycle d'adsorption avec pression alternée, en particulier un cycle PSA (Pressure Swing Adsorption) pour produire de l'oxygène gazeux ayant une pureté de 90 à 95% environ ; un tel appareil est commercialisé par la Société TAEMA sous la dénomination ZEFIR™.

Dans tous les cas, l'administration de l'oxygène au patient se fait par l'intermédiaire d'une interface de distribution de gaz susceptible d'être reliée aux voies aériennes supérieures de l'utilisateur, en particulier des lunettes nasales délivrant au patient de l'oxygène gazeux de manière continu, c'est-à-dire pendant les phases inspiratoires et expiratoires, ou de manière synchronisée avec la respiration, c'est-à-dire pendant les phases inspiratoires seulement.

Pour une administration efficace de l'oxygène au patient de manière synchronisée avec les phases inspiratoires du patient, on peut, par exemple, utiliser un système à valve "économiseuse" du type de celui commercialisé par la Société TAEMA sous la dénomination OPTIMOX™.

En général, le choix de l'équipement d'administration d'oxygène doit non seulement tenir compte de la consommation d'oxygène du patient, c'est-à-dire du débit d'oxygène consommé par le patient, et de la durée quotidienne du traitement, mais aussi permettre, autant que faire se peut, au patient de continuer à mener une existence normale, c'est-à-dire de continuer à déambuler et à exercer des activités à l'extérieur de son domicile, notamment des activités professionnelles, sans être gêné ou au minimum par ledit équipement.

Partant de là, les équipements portables préférentiellement utilisés actuellement sont ceux munis d'un réservoir d'oxygène liquide relié à un système d'évaporation destiné à vaporiser l'oxygène liquide avant son envoi vers le patient, c'est-à-dire les appareils de type FREELOX™.

Toutefois, ces appareils présentent l'inconvénient d'être d'autonomie relativement limitée, à savoir d'environ 24 heures lorsqu'ils fonctionnent de manière synchronisée avec la respiration, c'est-à-dire pendant les phases inspiratoires, mais de seulement quelques heures de manière continue, c'est-à-dire pendant les phases inspiratoires et expiratoires.

En général, de tels réservoirs ont une contenance allant de 0.5 à 2 litres d'oxygène liquide, soit environ 400 à 1600 litres d'oxygène gazeux.

Une fois que le réservoir d'oxygène liquide est vide, il doit être rempli à nouveau auprès d'une source d'oxygène liquide, tel un réservoir de stockage par exemple, ou remplacé par un autre réservoir plein.

Il s'ensuit alors que la déambulation est, dans ce cas, étroitement dépendante de l'approvisionnement en oxygène liquide du réservoir, donc aussi de l'approvisionnement en oxygène liquide de la source d'oxygène liquide ou du remplacement du réservoir vide par un réservoir plein.

Par ailleurs, il existe des systèmes permettant de remplir des réservoirs, telles des bouteilles, portables avec de l'oxygène gazeux produit à partir de concentrateurs d'oxygène.

De tels équipements comprennent un concentrateur d'oxygène permettant de prélever et/ou de séparer l'oxygène de l'air ambiant et de le comprimer ensuite dans un réservoir portable déconnectable du concentrateur.

Bien que ce type d'équipement offre une alternative au patient déambulant, à un coût de fonctionnement moindre par rapport à la livraison de sources d'oxygène sous forme liquide, il s'avère que ce type d'équipement présente plusieurs inconvénients, notamment :
- il nécessite un investissement supérieur à celui d'un dispositif à réserve d'oxygène liquide,
- il ne permet pas toujours d'aboutir à une production suffisante d'oxygène pour satisfaire les besoins du patient, en particulier lorsque celui-ci a des besoins importants en oxygène.
- l'autonomie du réservoir portable d'oxygène gazeux est souvent plus limitée que pour un dispositif à réserve d'oxygène liquide, à savoir de quelques heures au maximum,
- étant donné que seule une faible partie du débit d'oxygène produit est dérivée vers le réservoir d'oxygène, le temps de remplissage du réservoir peut s'avérer très long, en particulier lorsque le débit nécessaire au patient est sensiblement égal ou équivalent de celui de production du concentrateur, par exemple de 4 à 6 litres par minute, et
- la compression d'oxygène gazeux peut présenter des risques, notamment dus à la présence éventuelle dans le flux d'oxygène gazeux de gouttelettes de graisse et/ou d'huile provenant des moyens de compression.

Le but de la présente invention est alors de proposer un équipement portable d'oxygénothérapie à domicile et de déambulation amélioré, lequel ne présente pas les inconvénients susmentionnés, ainsi qu'un procédé de fonctionnement d'un tel équipement.

En d'autres termes, l'invention vise à proposer un appareil présentant une autonomie plus élevée car basée sur la recharge de batteries électriques ou analogues et qui soit de masse la plus faible possible et d'encombrement minimal de manière à pouvoir être porté ou transporté facilement par un patient, notamment lors de ses déambulations, c'est-à-dire sans effort important, par exemple en étant accroché en bandoulière au patient par tout dispositif de transport adapté, telle des sangles, une sacoche ou tout autre moyen analogue.

L'invention concerne alors un équipement médical portable ou transportable de fourniture d'un gaz riche en oxygène à un utilisateur comprenant :
- des moyens de compression de gaz pour fournir de l'air à une pression supérieure à 10⁵ Pa à des moyens concentrateurs de gaz,
- des moyens concentrateurs de gaz permettant de produire un gaz riche en oxygène contenant de 50 % vol. à 99 % vol. d'oxygène à partir d'air comprimé par lesdits moyens de compression de gaz, les moyens concentrateurs de gaz comprenant au moins une enceinte de séparation de gaz contenant au moins un lit d'adsorbant, ledit au moins un lit d'adsorbant contenant des particules de zéolite de type X ou A échangée par un ou des cations métalliques.

Selon le cas, le dispositif selon l'invention peut comprendre l'une ou plusieurs des caractéristiques suivantes :
- des moyens d'accumulation de gaz permettant de recueillir et stocker, au moins temporairement, au moins une partie de l'oxygène produit, par exemple une capacité tampon.
- des moyens de réchauffage ou de refroidissement de gaz permettant de réchauffer ou refroidir au moins une partie de l'oxygène produit de manière à le porter à une température compatible avec la respiration humaine, de préférence entre 5°C et 37°C, par exemple de 15 à 25°C.
- des moyens de d'acheminement de gaz permettant d'acheminer au moins une partie de l'oxygène produit par lesdits moyens concentrateurs de gaz jusqu'à une interface de distribution de gaz susceptible d'être reliée aux voies aériennes supérieures d'un utilisateur.
- les moyens concentrateurs de gaz comportent, en outre, au moins un lit de catalyseur, agencé en amont, en aval ou à l'intérieur d'un lit d'adsorbant.
- les moyens concentrateurs de gaz comprennent au moins deux enceintes de séparation de gaz fonctionnant en parallèle.
- il comporte des moyens d'alimentation en courant électrique pour alimenter en courant électrique au moins lesdits moyens de compression de gaz.
- les moyens d'alimentation en courant électrique sont ou comportent au moins une batterie autonome ou rechargeable, ou analogue, de préférence une ou plusieurs batteries rechargeable par raccordement à une prise de courant via un dispositif de rechargement adapté.
- les moyens concentrateurs de gaz sont au moins une enceinte de séparation de gaz contenant au moins un lit d'adsorbant contenant des particules de zéolite de type X ou A échangée par un ou des cations métalliques choisis parmi les cations lithium, calcium, potassium et/ou zinc.
- au moins un lit d'adsorbant contenant des particules de zéolite de type X ou A échangée par un ou des cations métalliques est situé en aval d'au moins un lit d'alumine destinée à arrêter au moins une partie des impuretés de type vapeur d'eau ou CO₂ susceptibles d'être présentes dans le flux gazeux, de préférence une alumine activée, éventuellement dopée ou imprégnée.
- les moyens concentrateurs de gaz sont au moins deux enceintes agencées en parallèle, fonctionnant selon un cycle de type PSA (Pressure Swing Adsorption = Adsorption par variation de pression), chaque enceinte contenant au moins un lit d'adsorbant contenant des particules de zéolite X échangée à au moins 80% par des cations lithium.
- il comporte des moyens de pilotage permettant de commander ou contrôler le cycle de type PSA. Il est à noter que PSA est utilisé dans son sens générique, c'est-à-dire englobant aussi les procédés VSA (Vacuum Swing Adsorption = Adsorption avec variation de vide).
- il comporte, en outre, des moyens de filtration, en particulier un ou plusieurs filtres, agencés en amont et/ou en aval des moyens de compression.
- il comporte une valve à la demande permettant de délivrer l'oxygène uniquement lors des phases inspiratoires de l'utilisateur, l'utilisation d'une telle valve à la demande accroît l'autonomie de l'équipement en divisant la production nécessaire d'oxygène du concentrateur par un facteur compris entre 1.5 et 6, à consommation identique d'oxygène par le patient, et donc diminue aussi l'énergie à la production d'oxygène et donc la masse des batteries.
- les moyens de d'acheminement de gaz comportent une ou plusieurs canalisations de gaz et/ou l'interface de distribution de gaz susceptible d'être reliée aux voies aériennes supérieures d'un utilisateur est choisie parmi les lunettes respiratoires et les masques respiratoires.

Par ailleurs, l'invention concerne aussi un procédé pour produire un gaz riche en oxygène à partir d'air susceptible d'être mis en oeuvre par un équipement selon l'invention, comprenant les étapes de :
(a) compression d'air jusqu'à une pression supérieure à 10⁵ Pa, de préférence à une pression de 1,1.10⁵ Pa à 5.10⁵ Pa,
(b) séparation de l'air comprimé à l'étape (a) avec des moyens concentrateurs de gaz pour produire un gaz riche en oxygène contenant de 50 % vol. à 99 % vol. d'oxygène, les moyens concentrateurs de gaz comprenant au moins une enceinte de séparation de gaz contenant au moins un lit d'adsorbant, ledit au moins un lit d'adsorbant contenant des particules de zéolite de type X ou A échangée par un ou des cations métalliques.

Selon le cas, le procédé de l'invention peut comprendre l'une ou plusieurs des caractéristiques suivantes :
- à l'étape (b), la séparation de l'air comprimé est effectuée par adsorption selon un cycle de type PSA en utilisant un adsorbant zéolitique de type X échangé par des cations métalliques lithium, calcium et/ou zinc, de préférence des cations calcium et/ou lithium.
- à l'étape (b), l'adsorbant est une zéolite X échangée à au moins 70% par des cations calcium ou à au moins 80% par des cations lithium.
- à l'étape (b), l'adsorbant est une zéolite X échangée à au moins 60% par des cations calcium ou à au moins 82% par des cations lithium, de préférence entre 84% et 98% par des cations lithium.
- il comporte une étape d'envoi d'au moins une partie de l'oxygène dans une ou plusieurs canalisations de gaz reliées à une interface de distribution de gaz.
- éventuellement, l'oxygène produit est réchauffé ou refroidi à une température de 5°C à 37°C, de préférence à une température de 15°C à 25°C.

L'invention va maintenant être décrite plus en détail en références aux figures annexées, données à titre illustratif mais non limitatif.

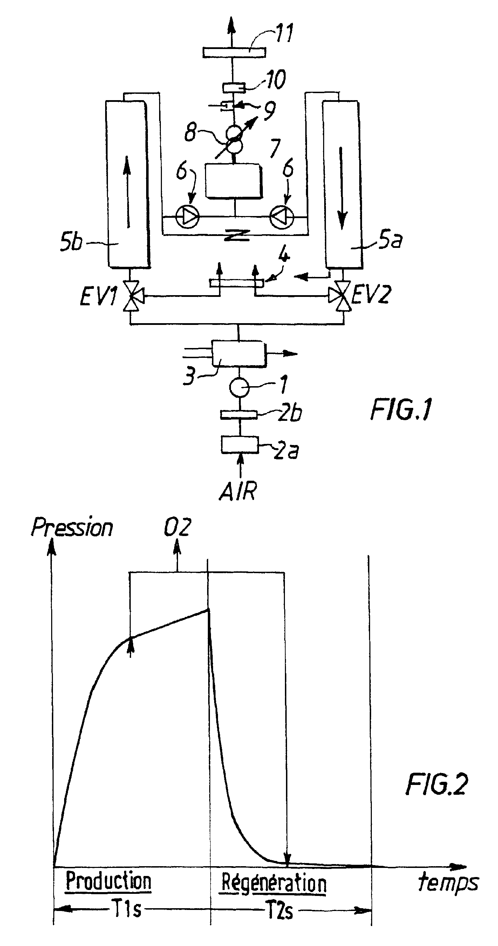

La figure 1 représente un schéma partiel d'un équipement selon l'invention, lequel comprend des moyens de compression de gaz, à savoir un compresseur 1, pour fournir de l'air à une pression supérieure à 10⁵ Pa, de préférence à une pression de 1,1.10⁵ Pa à 5.10⁵ Pa, à des moyens concentrateurs de gaz, à savoir deux récipients d'adsorption ou adsorbeurs 5a, 5b.

Les moyens concentrateurs de gaz 5a, 5b permettant de produire un gaz riche en oxygène contenant de 50 % vol. à 99 % vol. d'oxygène, habituellement de 90 % à 95% d'oxygène, à partir d'air comprimé par lesdits moyens de compression 1 de gaz.

Plus précisément, les deux adsorbeurs 5a, 5b fonctionnent en parallèle selon un cycle PSA, c'est-à-dire que l'adsorbeur 5b est en phase de production d'oxygène, pendant que l'adsorbeur 5a est en phase de régénération, et inversement.

Afin de disposer d'un débit d'oxygène produit adéquat pour une masse totale inférieure d'adsorbant, on utilise préférentiellement un adsorbant de type zéolite X enrichi à au moins 80% au lithium par une technique classique d'échange d'ions. De tels adsorbants et procédés PSA sont notamment décrits dans les documents EP-A-885646, EP-A-885049, EP-A-885089, EP-A-884088, EP-A-880989, EP-A-884086 et EP-A-875277.

En effet, la substitution d'un tamis moléculaire classique par un tamis de type zéolite au lithium permet d'augmenter la quantité d'O₂ produit par augmentation du rendement et de la productivité du concentrateur.

De préférence, l'air ambiant est comprimé après filtration par des filtres 2a, 2b, adéquats, notamment un filtre bactériologique 2b.

L'air comprimé et filtré alimente ensuite l'un des deux adsorbants 5a, 5b remplis de tamis moléculaire.

L'azote étant sélectivement adsorbé sur le tamis moléculaire, le gaz en sortie de l'adsorbeur 5a ou 5b en phase de production est presque exclusivement composé d'oxygène (90-95%).

L'oxygène ainsi produit est envoyé vers une capacité tampon 7 servant de moyens d'accumulation temporaire du gaz produit.

Avant saturation de l'adsorbant contenu dans l'adsorbeur 5a ou 5b en phase de production, un jeu d'électrovannes EV1, EV2 dirige l'air comprimé vers le second adsorbeur 5b ou 5a, précédemment en phase de régénération, et qui entre alors, à son tour, en phase de production.

Le premier adsorbeur 5b ou 5a est alors, quant à lui, régénéré par remise à la pression atmosphérique ou à une pression sub-atmosphérique et est purgé par circulation à contre-courant d'une fraction du débit d'oxygène de l'autre adsorbeur qui est lui en phase de production.

Un tel cycle PSA est schématisé sur la figure 2, où on a représenté le profil des pressions dans chacun des adsorbeurs 5a, 5b, ainsi que la durée des cycles de production d'oxygène et de régénération.

Chaque adsorbeur est soumis cycliquement à :
- une phase de production de durée T1 durant laquelle l'adsorbeur est mis sous pression en étant alimenté en air comprimé de manière à produire de l'oxygène ;
- une phase de régénération de durée T2=T1 durant laquelle l'adsorbeur est dépressurisé puis purgé à contre-courant avec une partie de l'oxygène produit par l'autre adsorbeur en phase de production.

Selon l'invention, on utilise avantageusement un tamis zéolitique enrichi au lithium car de tels tamis présentent des caractéristiques d'adsorption supérieures aux tamis classiques, par exemple une zéolite X ou A non-échangée, à savoir une zéolite au sodium.

Il va de soi que les performances du concentrateur dépendent notamment de l'alimentation en air, notamment le compresseur 1, des propriétés du tamis choisi, en particulier les isothermes d'adsorption, la géométrie et la granulométrie des particules..., de la quantité de tamis utilisée, du profil du cycle PSA mis en oeuvre, de la température...

Ces performances sont exprimées notamment par le rendement, c'est-à-dire la quantité d'O₂ produit/quantité d'O₂ entrant, et par la productivité, c'est-à-dire la quantité d'O₂ produit/volume d'adsorbant.

Classiquement, pour un équipement délivrant 5 l/min d'O₂ à 90%, on obtient un rendement de l'ordre de 25%.

Or, à 10⁵ Pa, la capacité d'adsorption pour l'azote passe d'environ 8 ml/g pour un tamis 13X classique à près de 20 ml/g pour un tamis de type zéolite 13X échangée au lithium, et, de manière analogue, la sélectivité (rapport entre la capacité d'adsorption de l'azote et de l'oxygène) passe de 3 à 6.

Il s'ensuit alors que les gains en rendement qui découlent de l'utilisation d'un tamis au lithium selon l'invention sont alors de l'ordre d'un facteur 2 par rapport à un tamis classique au sodium.

De tels gains en rendement dus à l'utilisation d'un tamis au lithium permettent de réduire le dimensionnement de l'équipement par rapport à un concentrateur classique car la quantité d'adsorbant utilisé est moindre et on peut alors utiliser un compresseur à débit plus faible, tout en gardant une production d'oxygène identique en débit et en teneur.

De manière générale, l'équipement selon l'invention offre donc la possibilité de réduire la taille et le poids, c'est-à-dire plus généralement l'encombrement, d'un concentrateur d'oxygène afin de permettre ou faciliter la déambulation du patient en lui offrant ainsi une autonomie nettement supérieure à une bouteille portable classique car le concentrateur fonctionne à l'aide de batteries électriques rechargeables.

L'équipement selon l'invention est particulièrement adapté au domaine médical, mais peut aussi être utilisé dans le domaine sportif, par exemple pour fournir un complément d'oxygène à un sportif après un effort physique.

## Revendications

1. Equipement médical portable ou transportable de fourniture d'un gaz riche en oxygène à un utilisateur comprenant :
- des moyens de compression de gaz pour fournir de l'air à une pression supérieure à 10⁵ Pa à des moyens concentrateurs de gaz,
- des moyens concentrateurs de gaz permettant de produire un gaz riche en oxygène contenant de 50 % vol. à 99 % vol. d'oxygène à partir d'air comprimé par lesdits moyens de compression de gaz, les moyens concentrateurs de gaz comprenant au moins une enceinte de séparation de gaz contenant au moins un lit d'adsorbant, ledit au moins un lit d'adsorbant contenant des particules de zéolite de type X ou A échangée par un ou des cations métalliques.

2. Equipement selon la revendication 1, caractérisé en ce que les moyens concentrateurs de gaz comprennent au moins deux enceintes de séparation de gaz fonctionnant en parallèle et contenant chacune au moins un lit d'adsorbant contenant des particules de zéolite, de préférence les moyens concentrateurs de gaz sont au moins deux enceintes fonctionnant en cycle de type PSA.

3. Equipement selon l'une des revendications 1 ou 2, caractérisé en ce que les particules de zéolite de type X ou A sont échangées par un ou des cations lithium, calcium, potassium et/ou zinc.

4. Equipement selon l'une des revendications 1 à 3, caractérisé en ce qu'il comporte une valve à la demande permettant de délivrer l'oxygène uniquement lors des phases inspiratoires de l'utilisateur.

5. Equipement selon l'une des revendications 1 à 4, caractérisé en ce que chaque enceinte contient au moins un lit d'adsorbant contenant des particules de zéolite X échangée à au moins 80% par des cations lithium.

6. Equipement selon l'une des revendications 1 à 5, caractérisé en ce qu'il comporte, en outre, des moyens d'alimentation en courant électrique pour alimenter en courant électrique au moins lesdits moyens de compression de gaz.

7. Equipement selon l'une des revendications 1 à 6, caractérisé en ce que les moyens d'alimentation en courant électrique sont choisies parmi les batteries ou les accumulateurs de courant autonomes et/ou rechargeables.

8. Equipement selon l'une des revendications 1 à 7, caractérisé en ce qu'il comporte, en outre, des moyens de filtration, en particulier un ou plusieurs filtres, agencés en amont et/ou en aval des moyens de compression.

9. Procédé pour produire un gaz riche en oxygène à partir d'air susceptible d'être mis en oeuvre par un équipement selon l'une des revendications 1 à 8, comprenant les étapes de :
(a) compression d'air jusqu'à une pression supérieure à 10⁵ Pa, de préférence à une pression de 1,1.10⁵ Pa à 5.10⁵ Pa,
(b) séparation, au moyen de moyens concentrateurs de gaz, de l'air comprimé à l'étape (a) par adsorption d'au moins une partie de l'azote pour produire un gaz riche en oxygène contenant de 50 % vol. à 99 % vol. d'oxygène, les moyens concentrateurs de gaz comprenant au moins une enceinte de séparation de gaz contenant au moins un lit d'adsorbant, ledit au moins un lit d'adsorbant contenant des particules de zéolite de type X ou A échangée par un ou des cations métalliques.

10. Procédé selon la revendication 9, caractérisé en ce qu'à l'étape (b), la séparation de l'air comprimé est effectuée par adsorption selon un cycle de type PSA en utilisant un adsorbant zéolitique de type X échangé par des cations métalliques, de préférence des cations calcium et/ou lithium.

11. Procédé selon l'une des revendications 9 ou 10, caractérisé en ce qu'à l'étape (b), l'adsorbant est une zéolite X échangée à au moins 60% par des cations calcium ou à au moins 82% par des cations lithium, de préférence entre 84% et 98% par des cations lithium.

12. Utilisation d'un adsorbant zéolitique de type X ou A échangé à au moins 60% par des cations calcium ou à au moins 80% par des cations lithium pour produire un gaz riche en oxygène contenant de 50 % vol. à 99 % vol. d'oxygène à partir d'air au moyen d'un équipement médical portable ou transportable.

13. Utilisation d'un adsorbant zéolitique de type X ou A échangé à au moins 60% par des cations calcium ou à au moins 80% par des cations lithium pour produire un gaz riche en oxygène contenant de 50 % vol. à 99 % vol. d'oxygène à partir d'air au moyen d'un dispositif concentrateur d'oxygène médical portable ou transportable.

14. Utilisation selon les revendications 12 ou 13 dans laquelle l'adsorbant est une zéolite X échangée de 70 à 90% par des cations calcium ou entre 84% et 98% par des cations lithium.
